Europäisches Patentamt

European Patent Office

Office européen des brevets

(19)

(11) Publication number: **0 097 959**
**B1**

(12) EUROPEAN PATENT SPECIFICATION

(45) Date of publication of patent specification: **15.10.86**

(51) Int. Cl.⁴: **A 01 N 53/00,** A 01 N 25/32,
A 01 N 25/22

(21) Application number: **83106296.3**

(22) Date of filing: **28.06.83**

(54) Stabilized pesticidal compositions.

(30) Priority: **28.06.82 US 392986**
**28.06.82 US 392987**

(43) Date of publication of application:
**11.01.84 Bulletin 84/02**

(45) Publication of the grant of the patent:
**15.10.86 Bulletin 86/42**

(84) Designated Contracting States:
**DE FR GB NL**

(56) References cited:
**EP-A-0 001 454**
**GB-A-1 429 437**
**US-A-3 859 121**

(73) Proprietor: **BIO-UCLAF CORPORATION**
**306 South Street**
**Wilmington Delaware (US)**

(72) Inventor: **Haus, Joseph B.**
**7 Van Vleck Street Apt. 5**
**Montclair New Jersey 07042 (US)**
Inventor: **Gombos, Esther**
**553 - 2nd Avenue**
**Lyndhurst New Jersey 07071 (US)**

(74) Representative: **Lederer, Franz, Dr. et al**
**Vanderwerth, Lederer & Riederer Patentanwälte**
**Lucile-Grahn-Strasse 22**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Summary of the invention

The present invention relates to pesticidal compositions. In particular, the present invention relates to substantially odor-free, pesticidal compositions comprising in combination, a pesticidal component having as the active pesticidal agent (5 - benzyl - 3 - furyl)methyl 2,2 - dimethyl - 3 - (2 - methylpropenyl)cyclopropanecarboxylate, and a stabilizing component. Said stabilizing component may comprise, alternatively, at least one stabilizing compound selected from linolenic acid oils, tall oils and tung oils wherein the amount of said stabilizing component present is at least twice the amount of the pesticidal agent, or at least one stabilizing compound selected from sodium carbonate and potassium carbonate, said alternative stabilizing compound being in aqueous solution together with a suitable emulsifier, and wherein the amount of said alternative stabilizing compound present is at least ten percent (10%) by weight of the amount of the pesticidal agent.

### Background of the present invention

The compound (5 - benzyl - 3 - furyl)methyl 2,2 - dimethyl - 3 - (2 - methylpropenyl)cyclopropanecarboxylate, which is sometimes written as 5 - benzyl - 3 - furylmethyl - cis, trans - chrysanthemate, is more generally known by the generic term Resmethrin in the United States, and Bioresmethrin in Europe. The compound exhibits stereoisomerism and each molecule is either a cis, or a trans isomer. The term Resmethrin, as used in the United States, is generally understood to refer to a combination of cis and trans isomers. Ther term Bioresmethrin is more common in Europe and is generally understood to refer to a preparation of substantially all trans isomers. (Either formula name or generic term may be used interchangeably throughout this specification). In either the cis or trans form, or in any combination of the two forms, this compound is a widely used, broad spectrum insecticide which combines a high insecticidal activity and low mammalian toxicity.

The compound, however, has one significant drawback which has limited its use. The compound is known to give off an unpleasant, urine-like odor after its application. In addition, the odor which is produced is very persistent and remains noticeable for a long period of time, particularly if the compound is used on absorptive surfaces such as rugs or wood paneling.

Conventional odor control methods have been employed to attempt to mask this unpleasant odor. In this regard, perfumed masking agents have been tested, but the masking effect only lasts for a short period of time. The unpleasant odor of Resmethrin typically persists for such a long period of time that any masking effect of such a perfume becomes ineffective.

This unpleasant odor is readily detected after exposure to sunlight, or even bright artificial light. Antioxidants, ultraviolet screening sunscreens, oxidizing and reducing agents have been suggested to prevent light-induced decomposition. Some of these agents have been successful in delaying the on-set of the typical unpleasant, urine-like odor. In this regard, British Specification 1,429,437 shows the addition of 2,2' - methylene bis - (6 - tert - butyl - 4 - ethylphenol), known to be an antioxidant, to render the odor of Resmethrin less unpleasant. Also disclosed as optional UV-absorbers were 4 - tert - butylphenyl salicylate or 2 - hydroy - 4 - methoxybenzophenone.

The unpleasantness and persistance of this odor has limited the specific uses for which Resmethrin is generally acceptable. Further, these problems have limited the use of Resmethrin in general purpose insecticidal compositions. Such compositions typically contain two or more specific purpose insecticides in combination. For example, such compositions frequently contain synthetic pyrethoids, variously known as Allethrin (the allyl homolog of cinerin I available commercially from Roussell-Uclaf), Bioallethrin (d - trans - allethrin available commercially from Fairfield American Corp.), Neopynamin (tetramethrin commercially available from Sumitomo), or other pyrethrins, all of which are known to have good "knockdown" activity, and are therefore particularly useful in household sprays for flying insects. Such compounds, when combined with Resmethrin and, preferably, a synergist such as - piperonyl butoxide, produce a useful, general purpose House and Garden-type aerosol with good knockdown and killing power. Such compositions would be expected to have a greater general acceptance if the odor problems associated with Resmethrin could be overcome.

### Objects of the present invention

It is an object of the present invention to improve the acceptability of 5 - benzyl - 3 - furylmethyl chrysanthemate as a broad spectrum insecticide.

It is a further object of the present invention to improve the acceptability of 5 - benzyl - 3 - furylmethyl chrysanthemate as a component in general purpose insecticide compositions.

It is a still further object of the present invention to stabilize pesticidal compositions containing 5 - benzyl - 3 - furylmethyl chrysanthemate to prevent the formation of unpleasant odor.

The other objects, features and advantages of the present invention will become more apparent in light of the following detailed description of the preferred embodiments thereof.

According to one embodiment of the present invention, there is provided a pesticidal composition comprising, a pesticidal component having at least one active pesticidal agent, which agent is (5 - benzyl - 3 - furyl)methyl 2,2 - dimethyl - 3 - (2 - methylpropenyl)cyclopropanecarboxylate, and wherein the improvement comprises rendering the pesticidal composition substantially odor-free by combining with said pesticidal component a stabilizing component comprising at least one stabilizing agent selected from

a) a compound selected from linolenic acid oils, tall oils and tung oils, wherein the amount of said compound present is at least twice the amount of the (5 - benzyl - 3 - furyl)methyl 2,2 - dimethyl - 3 - 2 - methylpropenyl)cyclopanecarboxylate, or

b) a compound selected from sodium carbonate and potassium carbonate, said stabilizing compound being in aqueous solution in the presence of a suitable emulsifier, wherein the amount of said stabilizing compound present is at least ten percent (10%) by weight of the amount of the (5 - benzyl - 3 - furyl)methyl 2,2 - dimethyl - 3 - (2 - methylpropenyl)cyclopropanecarboxylate.

According to another embodiment of the present invention, there is provided a pesticidal composition comprising, in combination, a pesticidal component having at least two active pesticidal agents, one of which agents is (5 - benzyl - 3 - furyl)methyl 2,2 - dimethyl - 3 - (2 - methylpropenyl)cyclopropanecarboxylate, and a stabilizing component comprising at least one compound selected from sodium carbonate and potassium carbonate, said stabilizing compound being in aqueous solution in the presence of a suitable emulsifier, wherein the amount of said stabilizing compound present is at least ten percent (10%) by weight of the amount of the (5 - benzyl - 3 - furyl)methyl 2,2 - dimethyl - 3 - (2 - methylpropenyl)cyclopropanecarboxylate, and the pH of the composition is less than 10.0, preferably between 8.0 and 9.0.

Detailed description of the present invention Resmethrin is soluble in various organic solvents, but insoluble in water. It is commonly sold as a 40% concentrate in an aromatic solvent. Solvents normally employed for this purpose include those commercially available from the Amoco Chemical Co. under the registered trademark "Panasol AN-2", from the Tenneco Oil Co. under the registered trademark "Tenneco 500-100", and from Exxon Inc. under the registered trademark "Aromatic 150". These compositions may then be further diluted and pressurized to produce oil-based aerosols which may be intended for numerous applications of a sporadic nature, or a single complete discharge. Resmethrin compositions may also be formulated as an emulsion with water and pressurized to provide insecticidal aerosols.

As noted above, the unpleasant odor produced by Resmethrin is readily detected after exposure to sunlight or bright artificial light. Studies of degradation products of Resmethrin have shown that one of the minor photo-decomposition products is phenylacetic acid. Additional studies have shown that it is the presence of this compound which accounts for the unpleasant, urine-like odor. Only a small amount of phenylacetic acid is produced in the decomposition of Resmethrin. However, organoleptic testing procedures have shown that as little as one part per trillion of phenylacetic acid in the air can be detected by odor panels. Obviously, to avoid the unpleasant odor, prevention of the formation of phenylacetic acid must be substantially complete.

In his study of the degradation of Resmethrin, the applicant noticed that when Resmethrin formulations are sprayed on glass plates the Resmethrin appears to crystallize before the unpleasant odor typical of phenylacetic acid begins to appear. It was then proposed that the phenylacetic acid odor might be prevented by the addition of some non-volatile liquid to the volatile carrier which would prevent such crystal formation. Emulsifiers, mineral oils, corrosion inhibitors and vegetable oils were proposed and tested by the applicant for this purpose. However, the only additives tested which consistently prevented the formation of the unpleasant odor of Resmethrin were wheat germ oils, soybean oil, linseed oil, tung oil and some tall oils. When these results were further examined, it became apparent that the additives which were operative as stabilizers were linolenic acid oils, tall oils and tung oils i.e. oils having conjugated double bonds. Such stabilizers were required to be present in an amount of at least twice the amount of Resmethrin in order to be effective for a satisfactory period of time. Any amount of stabilizer above this minimum will have the effect of further preventing the formation of the unpleasant odor typical of phenylacetic acid. However, it is not seen that the amount of such stabilizer will ever need to exceed fifty (50) times the amount of Resmethrin in the practice of this invention as a practical matter. Preferably the amount of such stabilizer is from 20 to 40 times the amount of Resmethrin. In sprays formulated for numerous applications, the amount of stabilzer will be on the order of three to five times the amount of Resmethrin. For total release sprays, requiring a single complete discharge, it has been found preferable to employ a much larger proportion, on the order of twenty to forty times the amount of Resmethrin.

It has also been found, surprisingly, that sodium carbonate or potassium carbonate, when present in the aqueous phase of Resmethrin emulsions will prevent the decomposition mechanism of the Resmethrin which yields the objectionable phenylacetic acid odor. Further, it has been found that levels of sodium carbonate or potassium carbonate as low as ten percent (10%) by weight of the Resmethrin, will have this desirable effect. An emulsion prepared in this way may be employed in that form. However, it is believed to be preferable to pressurize the emulsion to provide an insecticidal aerosol.

When utilized in such serosol sprays, sodium carbonate or potassium carbonate levels which still represent at least ten percent (10%) by weight of Resmethrin, may be as low as one-tenth of one percent (0.1%) by weight of the overall composition, and will prevent the formation of phenylacetic acid. The addition of one percent (1.0%) sodium carbonate to a typical aqueous pressurized spray of Resmethrin will increase the pH of the composition to about 11.0, but the Resmethrin appears to remain substantially stable at such elevated pH levels. At levels of sodium carbonate or potassium carbonate above about three-tenths of one percent (0.3%) by weight of the composition, however, the elevated pH begins to show an effect on unprotected aerosol can linings. For this reason it appears preferable to limit the proportion of stabilizing sodium carbonate or potassium carbonate to levels which will represent between one-tenth of one percent (0.1%) by weight and three-tenths of one percent (0.3%) by weight of such aerosol compositions. Treatment of the aerosol can linings to prevent the effects of higher pH will allow use of sodium carbonate or potassium carbonate at higher levels.

In order to determine if the advantage of the stabilizing agents employed in the present invention was merely a function of increased pH, similar samples were prepared combining Resmethrin with one percent (1.0%) sodium hydroxide (pH 12), one percent (1.0%) sodium borate (pH 10) and one percent (1.0%) triethanolamine (pH 10). None of these formulations prevented the characteristic unpleasant odor of Resmethrin. In addition, a sample was prepared combining Resmethrin with one percent (1.0%) sodium bicarbonate. The resulting composition, with a pH of 8.0, demonstrated reduced, but still objectionable odor.

Although Resmethrin is an excellent broad spectrum insecticide, it is known to lack the quick "knockdown" properties required in a household spray for flying insects. As noted earlier, synthetic pyrethoids, variously known as Bioallethrin, Allethrin, Neopynamin, and other pyrethrins are all known to have such "knockdown" characteristics. The combination of any of these compounds with Resmethrin, preferably with a synergist such as piperonyl butoxide, will produce a general purpose House and Garden-type spray having good knockdown and kill. Further, the present invention will provide the benefits of such a spray without the problems associated with the unpleasant odor caused by the phenylacetic acid which is created when Resmethrin begins to photo-decompose. In oil-based compositions, this is accomplished by the addition of such a "knockdown" agent to the formulation as previously described.

In pesticidal emulsions, this decomposition is prevented in the following manner.

In order to prevent the decomposition of Resmethrin in such combination compositions, an amount of sodium carbonate, potassium carbonate or some combination of the two, is added in aqueous solution, representing at least ten percent (10%) of the amount of Resmethrin. This composition would be expected to have a fairly high pH, of the order of about 11.0. At such a level any of the various knockdown ingredients set out above would be expected to decompose quickly. This decomposition may be prevented by the addition of a sufficient amount of a buffering agent, such as sodium bicarbonate or monobasic sodium phosphate, to maintain the pH below 10.0 or preferably, lower the pH to approximately 8.5 to 9.0. Since sodium bicarbonate appears to be marginally effective in preventing the odor-causing decomposition, it is believed to be the preferred buffering agent. Preferably, the total amount of stabilizing agent and buffering agent should be no more than fifteen one-hundreths of one percent (0.15%) of the total aerosol composition in the practice of this embodiment.

Various emulsifiying agents may be employed in the aqueous emulsion compositions of the present invention. The amounts necessary will be dependent on the purpose to be served by the various compositions. Thus, compositions to be used immediately after preparation will require little emulsification, while compositions intended to be shelf stable must be adequately protected from phase separation. Emulsifiers which will serve these purposes in Resmethrin compositions are well known to the art.

The present invention is shown more clearly in the following illustrative examples.

Example 1

Seven and one-half grams (7.5 g.) of a 40% Resmethrin concentrate in a commercially available aromatic solvent, representing three grams (3.0 g.) of Resmethrin, and fifteen grams (15.0 g.) of wheat germ oil, obtained commercially from the Sanrak Corp. were dissolved in a sufficient quantity of deodorized kerosene to make up a total weight of one hundred grams (100 g.). This solution was then hand pumped onto glass plates which were subsequently exposed to bright sunlight. After several hours the plates were examined and the unpleasant odor of phenylacetic acid was not detected Glass plates sprayed with a control solution formulated in the same manner, but without the wheat germ oil, produced the strong, unpleasant, urine-like odor typical of phenylacetic acid within several hours.

Example 2

One-half gram (0.5 g.) of the same 40% Resmethrin concentrate employed in Example 1, representing two-tenths of a gram (0.2 g.) of Resmethrin, one-tenth of a gram (0.1 g.) of Bioallethrin, a synthetic pyrethroid commercially available from Roussell-Uclaf, and four grams (4.0 g.) of refined edible soybean oil were dissolved in a suffcient quantity of deodorized kerosene to make a total weight of twenty grams (20.0 g.). This solution was introduced into an aerosol container and a valve was attached. The container was then charged with eighty grams (80.0 g.) of a 1:1 mixture of Freon 11 and Freon 12, both commercially available flurocarbons from E.I. du Pont de Nemours. None of the unpleasant odor typical of phenylacetic acid was detected on glass plates which were sprayed with the aerosol composition and exposed to bright sunlight on a windowsill. Glass plates sprayed with a control aerosol formulated in the same manner, but without the soybean oil, produced the strong, unpleasant, urine-like odor typical of phenylacetic acid within several hours.

Example 3

Twenty-five one-hundreths of a gram (0.25 g.) of the same 40% Resmethrin concentrate employed in the previous examples, representing one-tenth of a gram (0.1 g.) of Resmethrin and two grams (2.0 g.) of commercial grade tung oil commercially available from the Welch, Holme & Clark Company, were dissolved in a sufficient quantity of deodorized kerosene to make up a total weight of ninety-seven grams (97.0 g.). This solution was introduced into an aerosol container and a valve was attached. The container was then charged with three grams (3.0 g.) of carbon dioxide to bring the container pressure to 6.895 bar one hundred pounds per square inch gauge (100 psig).

None of the unpleasant odor typical of phenylacetic acid was detected on carpet pieces which were sprayed with the aerosol composition and exposed to bright sunlight. Carpet pieces sprayed with a control aerosol formulated in the same manner, but without the tung oil, produced the strong, unpleasant, urine-like odor typical of phenylacetic acid within several hours.

Example 4

One gram (1.0 g.) of the same 40% Resmethrin concentrate employed in the previous examples, representing fourtenths of a gram (0.4 g.) of Resmethrin, twenty grams (20.0 g.) of tall oil, available commercially from Arizona Chemical Co. under the registered trademark "Actinol FA-1", and nine grams (9.0 g.) of deodorized kerosene were dissolved in a sufficient quantity of methylene chloride to make up a total weight of 75 grams. This solution was introduced into an aerosol container and a valve was attached. The container was then charged with twenty-five grams (25.0 g.) of commercial grade propane to provide an aerosol spray which would deliver one hundred milligrams (100 mg.) of spray composition every thirty seconds for thirty days.

This aerosol was allowed to disperse in a 3.66 m (twelve foot) by 3.66 m (twelve foot) room for several days. None of the unpleasant odor typical of phenylacetic acid was detected. A similar test was conducted with a control aerosol formulated in the same manner, but without the tall oil, and the strong, unpleasant, urine-like odor typical of phenylacetic acid was produced within several hours.

Example 5

One and twenty-five one-hundreths gram (1.25 g.) of a 40% Resmethrin concentrate in a commercially available aromatic solvent, equivalent to one-half gram (0.5 g.) of Resmethrin, was placed in an aerosol container. To this concentrate was added seventy-five one-hundreths of a gram (0.75 g.) of an emulsifier, commercially available from the Witco Chemical Co., and sold under the trade name Witconol 14, one-half gram (0.5 g.) of a corrosion inhibitor, commercially available from Swift & Co., and sold under the trade name Epoxol 9-5, and sixty-two and five-tenths grams (62.5 g.) of deionized water containing thirty-six one-hundreths of a gram (0.36 g.) of sodium carbonate in solution. An aerosol valve was then attached and the container was charged with thirty-five grams (35 g.) of isobutane.

The aerosol composition thus prepared was tested on glass and carpet surfaces. None of the unpleasant odor typical to phenylacetic acid developed, even after exposure to direct sunlight. Glass and carpet surfaces sprayed with a control aerosol formulated in the same manner, but without the sodium carbonate, produced the strong unpleasant, urine-like odor typical of phenylacetic acid within several hours.

Example 6

One-half gram (0.5 g.) of the same 40% Resmethrin concentrate representing two-tenths gram (0.2 g) Resmethrin and fifteen one-hundreths of a gram (0.15 g) of Bioallethrin, a synthetic pyrethroid commercially available from Roussell-Uclaf, were placed in an aerosol container. To these components was added one gram (1.0 g.) of Witconol 14, seventy-five one-hundredths of a gram (0.75 g.) of Epoxol 9-5 as in the previous example. In addition, sixty-seven and six-tenths gram (67.6 g.) deionized water, containing seventy-two one-thousandths of a gram (0.072 g.) of sodium carbonate and seventy-two one-thousandths of a gram (0.072 g.) sodium bicarbonate in solution was added. An aerosol valve was then attached and the container was charged with thirty grams (30 g.) of an 87%—13% mixture of isobutane and propane.

The aerosol composition thus prepared was tested and did not present an odor problem. Tests with a control aerosol formulated in the same manner, but without the sodium carbonate produced the strong, unpleasant, urine-like odor typical of phenylacetic acid within several hours.

Example 7

Twenty-five one-hundreths of a gram (0.25 g.) of the same Resmethrin concentrate representing one-tenth gram (0.1 g.) Resmethrin, two-tenths of a gram (0.2 g.) of Allethrin, a synthetic pyrethoid commercially available from Fairfield American Corp., and eight-tenths of a gram (0.8 g.) of piperonyl butoxide, also commercially available from Fairfield American Corp., were placed in an aerosol container. As in the previous examples, to this mixture was added eight-tenths of a gram (0.8 g.) of Witconol 14 and seven-tenths of a gram (0.7 g.) of Epoxol 9—5. In addition, sixty-seven and twenty-five one-hundreths gram (67.25 g.) of deionized water, containing seventy-two one-thousandths of a gram (0.072 g.) of sodium carbonate and seventy-two one-thousandths of a gram (0.072 g.) of monobasic sodium phosphate in solution, was added. An aerosol valve was then attached and the container was charged with thirty grams (30 g.) of an 87%—13% mixture of isobutane and propane.

The aerosol composition produced was tested on glass plates which were exposed to direct sunlight. None of the unpleasant odor typical of phenylacetic acid developed. Glass plates sprayed with a control aerosol furmulated in the same manner, but without the sodium carbonate and monobasic sodium phosphate, produced the strong, unpleasant, urine-like odor typical of phenylacetic acid within several hours.

Example 8

Sixty two grams of the same 40% concentrate, representing twenty-five grams (25 g.) of Resmethrin, and eight grams (8.0 g.) of emulsifier, commercially available from the Stepan Chemical Co., under the trade name Toximul D, were dissolved in a sufficient quantity of aromatic solvent, commercially available from the Amoco Chemical Co., under the trade name Panasol AN-2, to make up one hundred grams (100 g.) of an emulsifiable concentrate.

A first sample, designated as Sample A, was prepared by diluting one gram (1.0 g.) of this emulsifiable concentrate with ninety-nine grams (99 g.) of water containing twenty-five one-hundreths of a gram (0.25 g.) of potassium carbonate in solution. A second sample, designated as Sample B, was prepared by diluting one gram (1.0 g.) of the same emulsifiable concentrate with ninety-nine grams (99 g.) of plain water.

Each of these samples were applied onto carpet squares which were then placed on a windowsill in bright sunlight. No odor was detected from the carpet square sprayed with Sample A, while the carpet square sprayed with Sample B produced the strong, unpleasant, urine-like odor typical of phenylacetic acid withing several hours.

**Claims**

1. A pesticidal composition comprising,

a pesticidal component having at least one active pesticidal agent, which agent is (5 - benzyl - 3 - furyl) methyl 2,2 - dimethyl - 3 - (2 - methylpropenyl)cyclopropanecarboxylate, and wherein the improvement comprises rendering the pesticidal composition substantially odor-free by combining with said pesticidal component

a stabilizing component comprising at least one stabilizing agent selected from

a) a compound selected from linolenic acid oils, tall oils and tung oils, wherein the amount of said compound present is at least twice the amount of the 5 - (benzyl - 3 - furyl) methyl 2,2 - dimethyl - 3 - (2 - methylpropenyl)cyclopropanecarboxylate, or

b) a compound selected from sodium carbonate and potassium carbonate, said stabilizing compound being in aqueous solution in the presence of a suitable emulsifier, wherein the amount of said stabilizing compound present is at least ten percent (10%) by weight of the amount of the 5 - (benzyl - 3 - furyl)methyl 2,2 - dimethyl - 3 - (2 - methylpropenyl)cyclopropanecarboxylate.

2. The pesticidal composition of claim 1 wherein the pesticidal component comprises at least two active pesticidal agents, one of which agents is (5 - benzyl - 3 - furyl)methyl 2,2 - dimethyl - 3 - (2 - methylpropenyl)cyclopropanecarboxylate, and a stabilizing component comprising at least one compound selected from sodium carbonate and potassium carbonate, said stabilizing compound being in aqueous solution in the presence of a suitable emulsifier, wherein the amount of said stabilizing compound present is at least ten percent (10%) by weight of the amount of the 5 - (benzyl - 3 - furyl)methyl 2,2 - dimethyl - 3 - (2 - methylpropenyl)cyclopropanecarboxylate, and the pH of the composition is less than 10.0.

3. The pesticidal composition of claim 2 wherein the pH of the composition is between 8.0 and 9.0.

4. The pesticidal composition of claim 3 wherein the pH of the composition is maintained by a suitable buffer.

5. The pesticidal composition of claim 1 in which the stabilizing compound is chosen from sodium carbonate and potassium carbonate, said stabilizing compound being in aqueous solution in the presence of a suitable emulsifier, wherein the amount of said stabilizing compound present is at least ten percent (10%) by weight of the amount of the 5 - (benzyl - 3 - furyl)methyl 2,2 - dimethyl - 3 - (2 - methylpropenyl)cyclopropanecarboxylate, in the form of a dilute and pressurized aerosol preparation.

6. The pesticidal composition of claim 5, further characterized in that the stabilizing compound represents no more than one percent (1.0%) of the overall aerosol composition.

7. The pesticidal composition of claim 1 in which the stabilizing compound is chosen from the group consisting of linolenic acid oils, tall oils and tung oils, wherein the amount of said compound present is from two (2) to fifty (50) times the amount of (5 - benzyl - 3 - furyl)methyl 2,2 - dimethyl - 3 - (2 - methylpropenyl)cyclopropanecarboxylate.

8. The pesticidal composition of claim 7 in which the amount of said stabilizing compound present is from three (3) to five (5) times the amount of (5 - benzyl - 3 - furyl)methyl 2,2 - dimethyl - 3 - (2 - methylpropenyl)cyclopropanecarboxylate.

9. The pesticidal composition of claim 7 in which the amount of said stabilizing compound present is from twenty (20) to forty (40) times the amount of (5 - benzyl - 3 - furyl)methyl 2,2 - dimethyl - 3 - (2 - methylpropenyl)cyclopropanecarboxylate.

10. A method of preparing a pesticidal composition comprising the steps of:

preparing a pesticidal component having at least one active pesticidal agent, which agent is (5 - benzyl - 3 - furyl)methyl 2,2 - dimethyl - 3 - (2 - methylpropenyl)cyclopropanecarboxylate, by dissolving said pesticidal agents in a suitable solvent,

preparing a stabilizing component having at least one stabilizing compound selected from of sodium carbonate and potassium carbonate, by dissolving said stabilizing compound in at least a sufficient quantity of water,

combining in the presence of a suitable emulsifier said pesticidal component and stabiliz-ing component in such proportion that the amount of said stabilizing compound represents at least ten percent (10%) by weight of the amount of (5 - Benzyl - 3 - furyl)methyl 2,2 - dimethyl - 3 - (2 - methylpropenyl)cyclopropanecarboxylate, and

adjusting the pH below 10.0, if necessary, to prevent decomposition of any additional pesticidal agent with a suitable buffering agent.

11. The method of claim 10 in which the buffer employed is sodium bicarbonate.

12. The method of claim 10 in which the buffer employed is monobasic sodium phosphate.

**Patentansprüche**

1. Pestizid-Zusammensetzung, umfassend

eine Pestizid - Komponente mit mindestens einem aktiven Pestizid-Mittel, wobei das Mittel (5 - Benzyl - 3 - furyl)methyl - 2,2 - dimethyl - 3 - (2 - methylpropenyl) - cyclopropancarboxylat ist, und

worin die Verbesserung die im wesentlichen geruchsfreie Gestaltung der Pestizid - Zusammensetzung umfaßt wobei man mit der Pestizid - Komponente

eine stabilisierende Komponente kombiniert, die mindestens ein stabilisierendes Mittel, ausgewählt aus

a) einer Verbindung ausgewählt aus Linolensäureölen, Tallölen und Tungölen, worin die Menge der vorhandenen Verbindung mindestens zweimal die Menge des 5 - (Benzyl - 3 - furyl) - methyl - 2,2 - dimethyl - 3 - (2 - methylpropenyl) - cyclopropancarboxylats beträgt, oder

b) eine Verbindung ausgewählt aus Natriumcarbonat und Kaliumcarbonat, wobei die stabilisierende Verbindung in einer wäßrigen Lösung in Gegenwart eines geeigneten Emulgators vorliegt, worin die Menge der vorhandenen stabilisierenden Verbindung mindestens zehn Gew.-% (10%) der Menge des 5 - (Benzyl - 3 - furyl) - methyl - 2,2 - dimethyl - 3 - (2 - methylpropenyl) - cyclopropancarboxylats ist, umfaßt.

2. Pestizid - Zusammensetzung nach Anspruch 1, worin die Pestizid - Komponente mindestens zwei aktive Pestizid - Mittel umfaßt, wobei eines dieser Mittel (5 - Benzyl - 3 - furyl) - methyl - 2,2 - diemthyl - 3 - (2 - methylpropenyl) - cyclopropancarboxylat ist, und eine stabilisierende Komponente, die mindestens eine Verbindung, ausgewählt aus Natriumcarbonat und Kaliumcarbonat umfaßt, wobei die stabilisierende Verbindung in wäßriger Lösung in Gegenwart eines geeigneten Emulgators vorliegt, worin die Menge der vorhandenen stabilisierenden Verbindung mindestens zehn Gew.-% (10%) der Menge des 5 - (Benzyl - 3 - furyl) - methyl - 2,2 - dimethyl - 3 - (2 - methylpropenyl) - cyclopropancarboxylats beträgt und der pH-Wert der Zusammensetzung weniger als 10,0 ist.

3. Pestizid - Zusammensetzung nach Anspruch 2, worin der pH-Wert der Zusammensetzung zwischen 8,0 und 9,0 liegt.

4. Pestizid-Zusammensetzung nach Anspruch 3, worin der pH-Wert der Zusammensetzung durch einen geeigneten Puffer erhalten wird.

5. Pestizid-Zusammensetzung nach Anspruch 1, worin die stabilisierende Verbindung ausgewählt ist aus Natriumcarbonat und Kaliumcarbonat, wobei die stabilisierende Verbindung in einer wäßrigen Lösung in Gegenwart eines geeigneten Emulgators vorliegt, worin die Menge der vorhandenen stabilisierenden Verbindung mindestens 10 Gew.-% (10%) der Menge des 5 - (Benzyl - 3 - furyl) - methyl - 2,2 - dimethyl - 3 - (2 - methylpropenyl) - cyclopropancarboxylats beträgt, in Form einer verdünnten und unter Druck stehenden Aerosolpräparation.

6. Pestizid-Zusammensetzung nach Anspruch 5, weiterhin dadurch gekennzeichnet, daß stabilisierende Verbindung nicht mehr als ein Prozent (1,0%) der gesamten Aerosolzusammensetzung darstellt.

7. Pestizid-Zusammensetzung nach Anspruch 1, worin die stabilisierende Verbindung ausgewählt ist aus der Gruppe, die aus Linolensäureölen, Tallölen und Tungölen besteht, worin die Menge der vorhandenen Verbindung die zwei- (2) bis fünfzig- (50) fache Menge des (5 - Benzyl - 3 - furyl) - methyl - 2,2 - dimethyl - 3 - (2 - methylpropenyl) - cyclopropancarboxylats beträgt.

8. Pestizid-Zusammensetzung nach Anspruch 7, worin die Menge der vorhandenen stabilisierenden Verbindung das drei- (3) bis fünf- (5) fache der Menge des (5 - Benzyl - 3 - furyl) - methyl - 2,2 - dimethyl - 3 - (2 - methylpropenyl) - cyclopropancarboxylats beträgt.

9. Pestizid-Zusammensetzung nach Anspruch 7, worin die Menge der vorhandenen stabilisierenden Verbindung die zwanzig- (20) bis vierzig- (40) fache Menge des (5 - Benzyl - 3 - furyl) - methyl - 2,2 - dimethyl - 3 - (2 - methylpropenyl) - cyclopropancarboxylats beträgt.

10. Verfahren zur Herstellung einer Pestizid - Zusammensetzung, das die Schritte:

Herstellen einer Pestizid - Komponente mit mindestens einem aktiven Pestizid-Mittel, wobei das Mittel (5 - Benzyl - 3 - furyl) - methyl - 2,2 - dimethyl - 3 - (2 - methylpropenyl) - cyclopropancarboxylat ist, durch Lösen der Pestizid-Mittel in einem geeigneten Lösungsmittel, Herstellen einer stabilisierenden Komponente mit mindestens einer stabilisierenden Verbindung ausgewählt aus Natriumcarbonat und Kaliumcarbonat durch Lösen der stabilisierenden Verbindung in mindestens einer ausreichenden Wassermenge, Kombinieren der Pestizid - Komponente und der stabilisierenden Komponente in Gegenwart eines geeigneten Emulgators in einem solchen Verhältnis, daß die Menge der stabilisierenden Verbindung mindestens zehn Gew.-% (10%) der Menge des (5 - Benzyl - 3 - furyl) - methyl - 2,2 - dimethyl - 3 - (2 - methylpropenyl) - cyclopropancarboxylats darstellt, und

Einstellen des pH-Wertes unterhalb von 10,0 falls nötig, um die Zersetzung von irgendeinem zusätzlichen Pestizid-Mittel mit einem geeigneten puffernden Mittel zu verhindern, umfaßt.

11. Verfahren nach Anspruch 10, worin der verwendete Puffer Natriumbicarbonat ist.

12. Verfahren nach Anspruch 10, worin der verwendete Puffer einbasiges Natriumphosphat ist.

## Revendications

1. Composition pesticide qui contient un constituant pesticide comprenant au moins un agent pesticide actif, cet agent étant le 2,2 - diméthyl - 3 - (2 - méthylpropényl)cyclopropanecarboxylate de (5 - benzyl - 3 - furyl)-méthyle, et qui est améliorée par le fait qu'elle est rendue pratiquement inodore par la combinaison, audit constituant pesticide, d'un constituant stabilisant comprenant au moins un agent stabilisant choisi parmi:

a) un composé choisi parmi des huiles d'acide linolénique, des tallöls et des huiles d'abrasin, la quantité présente de ce composé étant au moins double de la quantité de 2,2 - dimethyl - 3 - (2 - méthylpropényl)cyclopropanecarboxylate de 5 - (benzyl - 3 - furyl)méthyle, ou

b) un composé choisi parmi le carbonate de sodium et le carbonate de potassium, ce composé stabilisant étant en solution aqueuse en présence d'un émulsifiant approprié, la quantité présente de ce composé stabilisant étant d'au moins dix pour cent (10%) en poids de la quantité du 2,2 - diméthyl - 3 - (2 - méthylpropényl)cyclopropanecarboxylate de 5 - (benzyl - 3 - furyl)-méthyle.

2. Composition pesticide selon la revendication 1, dans laquelle le constituant pesticide comprend au moins deux agents pesticides actifs, l'un de ces agents étant le 2,2 - diméthyl - 3 - (2 - méthylpropényl)cyclopropanecarboxylate de (5 - benzyl - 3 - furyl)méthyle, et un constituant stabilisant comprenant au moins un composé choisi parmi le carbonate de sodium et le carbonate de potassium, ce composé stabilisant étant en solution aqueuse en présence d'un émulsifiant approprié, la quantité présente du composé stabilisant étant d'au moins 10 pour 100 (10%) en poids de la quantité du 2,2 - diméthyl - 3 - (2 - méthylpropényl)cyclopropanecarboxylate de 5 - (benzyl - 3 - furyl)méthyle et le pH de la composition étant inférieur à 10,0.

3. Composition pesticide selon la revendication 2, le pH de cette composition étant compris entre 8,0 et 9,0.

4. Composition pesticide selon la revendication 3, le pH de cette composition étant maintenu par un tampon approprié.

5. Composition pesticide selon la revendication 1, dans laquelle le composé stabilisant est choisi parmi le carbonate de sodium et le carbonate de potassium, ce composé stabilisant étant en solution aqueuse en présence d'un émulsifiant approprié, la quantité présente de ce composé stabilisant étant d'au moins dix pour cent (10%) en poids de la quantité de 2,2 - diméthyl - 3 - (2 - méthylpropényl)cyclopropanecarboxylate de 5 - (benzyl - 3 - furyl)méthyle, sous la forme d'une préparation d'aérosol diluée et mise sous pression.

6. Composition pesticide selon la revendication 5, caractérisée en outre en ce que le composé stabilisant ne représente pas plus de un pour cent (1,0%) de la composition d'aérosol totale.

7. Composition pesticide selon la revendication 1, dans laquelle le composé stabilisant est choisi dans le groupe constitué par des huiles d'acide linolénique, des tallöls et des huiles d'abrasin, la quantité présente de ce composé étant comprise entre deux (2) et cinquante (50) fois la quantité de 2,2 - diméthyl - 3 - (2 - méthylpropényl)cyclopropanecarboxylate de (5 - benzyl - 3 - furyl)-méthyle.

8. Composition pesticide selon la revendication 7, dans laquelle la quantité présente du composé stabilisant est comprise entre trois (3) et cinq (5) fois la quantité de 2,2 - diméthyl - 3 - (2 - méthylpropényl)cyclopropanecarboxylate de (5 - benzyl - 3 - furyl)méthyle.

9. Composition pesticide selon la revendication 7, dans laquelle la quantité présente de composé stabilisant est comprise entre vingt (20) et quarante (40) fois la quantité 2,2 - diméthyl - 3 - (2 - méthylpropényl)cyclopropanecarboxylate de (5 - benzyl - 3 - furyl)méthyle.

10. Procédé de préparation d'une composition pesticide, comprenant les opérations consistant à préparer un constituant pesticide comprenant au moins un agent pesticide actif, cet agent étant le 2,2 - diméthyl - 3 - (2 - méthylpropényl)cyclopropanecarboxylate de (5 - benzyl - 3 - furyl)-méthyle, par dissolution de ces agents pesticides dans un solvant appropriée, à préparer un constituant stabilisant comprenant au moins un composé stabilisant choisi parmi le carbonate de sodium et le carbonate de potassium, par dissolution de ce composé stabilisant dans une quantité au moins suffisante d'eau, à combiner, en présence d'un émulsifiant approprié, le constituant pesticide et le constituant stabilisant dans des proportions telles que le quantité du composé stabilisant représente au moins dix pour cent (10%) en poids de la quantité de 2,2 - (diméthyl - 3 - (2 - méthylpropényl)cyclopropanecarboxylate de (5 - benzyl - 3 - furyl)méthyle, et à régler le pH au-dessous de 10,0, si nécessaire, afin d'éviter la décomposition d'un éventuel agent pesticide supplémentaire, avec un agent tampon approprié.

11. Procédé selon la revendication 10, dans lequel le tampon utilisé est le bicarbonate de sodium.

12. Procédé selon la revendication 10, dans lequel le tampon utilisé est le phosphate de sodium monobasique.